Europäisches Patentamt

European Patent Office

Office européen des brevets

(11) Veröffentlichungsnummer : **0 452 343 B1**

(12) **EUROPÄISCHE PATENTSCHRIFT**

(51) Int. Cl.⁵ : **F16C 7/02**

(45) Veröffentlichungstag der Patentschrift :
**15.09.93 Patentblatt 93/37**

(21) Anmeldenummer : **90900158.8**

(22) Anmeldetag : **12.12.89**

(86) Internationale Anmeldenummer :
**PCT/EP89/01521**

(87) Internationale Veröffentlichungsnummer :
**WO 90/07654 12.07.90 Gazette 90/16**

---

(54) **PLEUELSTANGE.**

(30) Priorität : **24.12.88 DE 3843954**

(43) Veröffentlichungstag der Anmeldung :
**23.10.91 Patentblatt 91/43**

(45) Bekanntmachung des Hinweises auf die
Patenterteilung :
**15.09.93 Patentblatt 93/37**

(84) Benannte Vertragsstaaten :
**DE FR GB**

(56) Entgegenhaltungen :
**FR-A- 2 502 036**
**GB-A- 1 460 528**
**US-A- 3 698 264**

(73) Patentinhaber : **AUDI AG**
**D-85045 Ingolstadt (DE)**

(72) Erfinder : **KOROSTENSKI, Erwin**
**Erlenweg 4**
**D-7101 Oedheim (DE)**

(74) Vertreter : **Speidel, Eberhardt**
**Postfach 13 20, Waldpromenade 26**
**D-82118 Gauting (DE)**

EP 0 452 343 B1

**Beschreibung**

Die Pleuelstange einer Brennkraftmaschine wird im Betrieb einer hohen, durch den Zünddruck erzeugten Druckbelastung ausgesetzt. Um ein Ausknicken des Pleuels unter dieser Druckbelastung zu vermeiden, wird der Pleuelschaft in der Regel mit einem I-förmigen Querschnitt ausgeführt. Eine derartige Pleuelstange läßt sich mit verhältnismäßig geringem Aufwand durch Schmieden oder Gießen herstellen. Für höhere Druckbeanspruchungen, beispielsweise in Rennmotoren, werden Pleuelstangen mit einem Pleuelschaft mit H-förmigen Querschnitt verwendet, die eine wesentlich größere Knickfestigkeit haben, jedoch in der Herstellung sehr teuer sind. Bei faserverstärkten Pleuelstangen wird allgemein eine erhöhte Festigkeit erreicht, allerdings ebenfalls unter Inkaufnahme erheblich höherer Herstellungskosten. Eine Steigerung der Knickfestigkeit durch Vergrößerung der Wandstärke des Pleuelschaftes sind schon aus Gewichtsgründen Grenzen gesetzt.

Bei bekannten Maßnahmen zur Erhöhung der Knickfestigkeit des Pleuels wird im wesentlichen im gleichen Maße auch die Zugfestigkeit erhöht, obgleich die Zugbelastung bei einem Saugmotor nur etwa 1/8 und bei einem Turbomotor nur etwa 1/14 der maximalen Druckbelastung beträgt. Die bekannten Pleuelstangen sind somit in Bezug auf die Zugbelastung außerordentlich überdimensioniert.

Die Erfindung bezieht sich auf eine Pleuelstange für eine Brennkraftmaschine mit einem Gußteil, das ein Kolbenbolzenauge, ein halbes Kurbelwellen-Lagerauge und einen diese verbindenden Pleuelschaft aufweist, in den ein langgestreckter, sich im wesentlichen über die ganze Länge des Pleuelschaftes erstreckender Kern aus einem Material eingegossen ist, der einen kleineren linearen Ausdehnungskoeffizienten, ein geringeres spezifisches Gewicht und einen höheren Schmelzpunkt als das Gußmaterial hat.

Bei einem bekannten Pleuel der gattungsgemäßen Art (FR-A-2502036) besteht der Kern aus anorganischen Fasern, beispielsweise Fasern aus rostfreiem Stahl oder Kohlefasern, die vor dem Umgießen mit dem Gußmaterial durch ein Kupferlot miteinander verbunden werden, um eine höhere Packungsdichte zur Erhöhung der Festigkeit der Pleuelstange zu erreichen. Hierzu ist eine innige metallogische Verbindung der Kohlefasern mit dem Gußmaterial erforderlich, die durch das Kupferlot und dadurch, daß das Gußmaterial in die Zwischenräume zwischen den Kohlefasern eindringt, verbessert wird. Von der FR-A-2502036 ist zudem bekannt, das Gußteil aus einer Leichtmetall-Legierung (z.B. Aluminium) und das Bauteil aus mit Kupfer verbundenen Graphitfasern herzustellen.

Demgegenüber liegt der Erfindung die Aufgabe zu Grunde, eine Pleuelstange der gattungsgemäßen Art zu schaffen, die sich durch ein geringes Gewicht und eine hohe Knickfestigkeit auszeichnet und verglichen mit faserverstärkten Pleuelstangen kostengünstig herstellt werden kann.

Diese Aufgabe wird erfindungsgemäß durch die in den Kennzeichen der unabhängigen Ansprüche 1 bis 3 angegebenen Merkmale gelöst.

Durch den erfindungsgemäßen Vorschlag wird bei der Herstellung der Pleuelstange durch den Kern in dem Gußmaterial eine Zugspannung erzeugt, um welche die im Betrieb auftretende Druckspannung verringert wird. Die Pleuelstange kann somit auf eine niedrigere maximale Druckspannung ausgelegt und entsprechend leichter ausgeführt werden.

Zu dem erfindungsgemäßen Vorschlag gibt die vorher erwähnte FR-A-2502036 keinerlei Anregung, da Kohlefasern keine Knickfestigkeit haben und daher auch nicht in der Lage sind, Druckspannungen aufzunehmen und Zugspannungen zu erzeugen. Darüber hinaus hat das Eindringen von Gußmaterial in die Zwischenräume zwischen den Kohlefasern zur Folge, daß sich dieses Gußmaterial beim Abkühlen genauso zusammenzieht wie das den Kern umhüllende Gußmaterial. Es ist daher nicht vorstellbar, daß sich in dem umhüllenden Gußmaterial eine Zugspannung aufbauen könnte.

Die Herstellung der erfindungsgemäßen Pleuelstange erfolgt in üblicher Weise dadurch, daß der Kern in die Form eingelegt und dann mit dem Gußmaterial umgossen wird. Bei der Verwendung von Stahl als Gußmaterial wird der Kern dabei auf etwa 500 - 700° erwärmt und dehnt sich entsprechend aus. Das flüssige Gußmaterial kühlt sich ab und nach dem Erreichen der Erstarrungstemperatur beginnt duch das Zusammenziehen des erstarrenden Gußmaterials eine Druckbeaufschlagung des Kerns. Da der Ausdehnungskoeffizient des Kerns kleiner ist als der des Gußmaterials, kann sich das Gußmaterial nicht frei zusammenziehen und es bauen sich in ihm Zugspannungen auf. Bei der Druckbelastung durch die Zündkräfte im Betrieb werden zunächst diese Zugspannungen abgebaut, bevor die Pleuelstange auf Druck beansprucht wird. Damit kann die Auslegung der Pleuelstange nach den resultierenden Druckkräften erfolgen, die kleiner sind als bei der üblichen Auslegung. Durch entsprechende Wahl der Werkstoffe für das Gußmaterial und den Kern lassen sich bei der Herstellung der erfindungsgemäßen Pleuelstange in dem Gußmaterial Zugspannungen erzeugen, die bis zu 60 % der in Betrieb auftretenden maximalen Druckspannungen betragen können. Der Pleuelschaft braucht dann nur auf etwa 40 % der im Betrieb auftretenden maximalen Druckspannung ausgelegt zu werden, was bei einer Pleuelstange mit gleicher Knickfestigkeit zu einer Gewichtseinsparung von bis zu 60 % für den Pleuelschaft führen kann. Dies gilt für eine Materialpaarung mit Titan als Gußmaterial und Graphit als Material für den Kern.

2

Bei Stahl als Gußmaterial und Graphit für den Kern läßt sich eine Gewichtsreduzierung von mindestens 20 - 30 % für den Pleuelschaft erreichen.

Wird beispielsweise als maximale Druckbelastung der Pleuelstange durch den Zünddruck ein Wert von 5 t angenommen und beträgt die Zugbelastung durch die Massenbeschleunigungskräfte in OT 1 t und wird durch den Kern in dem Gußmaterial eine Zugspannung von 2 t erzeugt, so verringert sich die maximale Druckbelastung auf 3 t, während die Zugbelastung auf ebenfalls 3 t steigt. Dadurch kann die Masse des Gußmaterials um 40 % verringert werden. Das Gewicht der Pleuelstange wird zwar durch das Gewicht des Kerns erhöht. Da das Material des Kerns jedoch eine erheblich geringere Wichte hat, ergibt sich insgesamt eine Gewichtseinsparung von etwa 20 - 30 %.

Als Gußmaterial kommt in erster Linie Stahl, Titan oder eine Leichtmetallegierung in Frage. Bevorzugte Werkstoffe für den Kern sind Graphit und keramische Stoffe, insbesondere Sinterkörper aus Bornitrid, Siliziumnitrid, Siliziumcarbid und Aluminiumtitanat ($Al_2TiO_5$) sowie für den Fall, daß Stahl als Gußmaterial verwendet wird, auch Titan. In der nachfolgenden Tabelle sind die für die Erfindung maßgeblichen Kennwerte dieser Werkstoffe aufgeführt.

|  | $\alpha(\mu m/m\ ^\circ K)$ | $\gamma\ (g/cm^3)$ | $T_s$ | $(^\circ C)$ |
|---|---|---|---|---|

**A. Gußmaterial**

| | | | |
|---|---|---|---|
| Vergütungsstahl | 12 – 19 | 7,8 | 1500 |
| Titan | 8 – 9.4 | 4,5 | 1900 |
| Al–Legierung | 18 – 24 | 2,7 | 700 |

**B. Kernmaterial**

| | | | |
|---|---|---|---|
| Graphit | 2,5 | 1,65 – 2,2 | 3800 |
| Bornitrid | 4,6 | 1,8 – 2,0 | 2300 |
| Siliziumnitrid | 3,0 | 2,3 – 2,6 | 2300 |
| Siliziumcarbid | 4,0 | 3,0 | 2300 |
| $Al_2TiO_5$ | 2,0 | 3,2 | 2300 |

$\alpha$ = linearer Ausdehnungskoeffizient
$\gamma$ = Wichte
$T_s$ = Schmelztemperatur

Aus der Tabelle ist ersichtlich, daß Graphit aufgrund seines kleinen linearen Ausdehnungskoeffizienten und seiner geringen Wichte ein bevorzugter Werkstoff für den Kern ist, da er einerseits in dem Gußmaterial eine hohe Zugspannung erzeugen kann und andererseits das Gewicht des Gußteils nur wenig erhöht. Die angegebenen Keramikwerkstoffe sind jedoch gleichermaßen für die angegebenen Gußwerkstoffe geeignet. Bei Stahl als Gußwerkstoff ist für den Kern auch Titan möglich, dessen Ausdehnungskoeffizient und dessen Wichte erheblich geringer sind als diejenigen von Stahl.

Ein Ausführungsbeispiel der Erfindung wird im folgenden unter Bezugnahme auf die Zeichnungen beschrieben. Es zeigt:

Fig. 1 einen Längsschnitt eines erfindungsgemäßen Pleuels,
Fig. 2 einen Schnitt entlang Linie 2-2 in Figur 1 und
Fig. 3 ein Diagramm, aus dem die Wärmedehnung der vorstehend erwähnten Werkstoffe in Abhängigkeit von der Temperatur dargestellt sind.

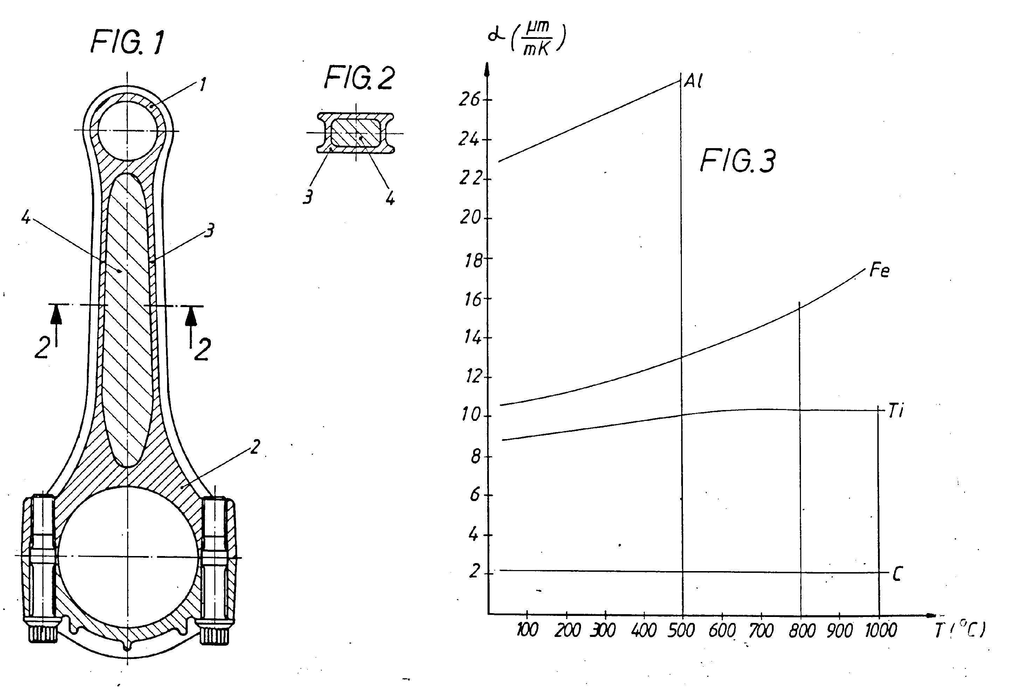

Die in Figur 1 dargestellte Pleuelstange für eine Brennkraftmaschine besteht aus enem Gußteil, das ein Kolbenbolzenauge 1, ein halbes Kurbelwellen-Lagerauge 2 und einen Pleuelschaft 3 aufweist, der die Teile 1 und 2 verbindet. In dem Pleuelschaft 3 ist ein Kern 4 eingegossen, der aus einem Material besteht, das ein geringeres spezifisches Gewicht, einen kleineren linearen Ausdehnungskoeffizienten und einen höheren Schmelzpunkt als das Gußmaterial hat.

Bei der Herstellung der Pleuelstange durch Umgießen des Kerns 4 in einer Form werden aufgrund des geringeren Ausdehnungskoeffizienten des Materials des Kerns 4 in dem den Pleuelschaft 3 bildenden Gußmaterial Zugspannungen aufgebaut. Bei der im Betrieb stattfindenden Druckbelastung der Pleuelstange durch die Zünddrücke wird zunächst diese Zugspannung abgebaut, bevor die Pleuelstange auf Druck beansprucht wird. Die maximale Druckbelastung, für die die Pleuelstange ausgelegt werden muß, ist somit um den Betrag dieser bei der Herstellung erzeugten Zugspannung verringert. Entsprechend kann die Masse und damit das Gewicht des den Pleuelschaft 3 bildenden Gußmaterials verringert werden.

Das Diagramm von Figur 3 zeigt die Änderung des linearen Wärmedehnungskoeffizienten von Graphit (C), Titan (Ti), Stahl (Fe) und einer Leichtmetallegierung (Al) in Abhängigkeit von der Temperatur (T). Während die Wärmedehnung von Graphit in dem hier interessierenden Bereich bis zur Erstarrungstemperatur des Gußmaterials im wesentlichen gleich bleibt, was im übrigen auch in etwa für die angegebenen keramischen Werkstoffe für den Kern gilt, steigt der Wärmedehnungskoeffizient für das Gußmaterial mehr oder weniger stark an. Bei der Abkühlung des Gußmaterials unter die Erstarrungstemperatur, die für Stahl und Titan bei etwa 800° - 1000° C und für die Leichtmetallegierung bei etwa 500° C liegt, findet eine starke Zusammenziehung des Gußmaterials statt, während der Ausdehnungskoeffizient des Werkstoffes des Kerns 4 im wesentlichen konstant bleibt. Da das Gußmaterial durch den Kern 4 daran gehindert ist, sich frei zusammenzuziehen, wird in dem Gußmaterial eine hohe Zugspannung aufgebaut, wodurch, wie vorher beschrieben, die maximale Druckbelastung der Pleuelstange im Betrieb erheblich reduziert wird.

Welche Materialpaarung gewählt wird, hängt von der Art der Brennkraftmaschine ab, für welche die Pleuelstange bestimmt ist. Bei Rennmotoren, die normalerweise mit sehr hoher Drehzahl laufen, ist die im Betreib auftretende Zugspannung verhältnismäßig hoch, so daß man eine Materialpaarung wählen wird, mit der bei der Herstellung der Pleuelstange in dem Gußmaterial eine geringere Zugspannung induziert wird als bei einer Pleuelstange für einen Serienmotor, bei dem aufgrund der niedrigeren Drehzahlen der im Betreib auftretende Unterschied zwischen Zug- und Druckbelastung größer ist.

Wird als Material für den Kern 4 Graphit gewählt, so sollte der Gießvorgang unter zumindest teilweisem Vakuum erfolgen, um eine Zersetzung des Graphits und bei der Verwendung von Stahl als Gußmaterial ein Aufkohlen desselben zu vermeiden.

## Patentansprüche

1. Pleuelstange für eine Brennkraftmaschine, mit einem Gußteil, das ein Kolbenbolzenauge (1), ein halbes Kurbelwellen-Lagerauge (2) und einen diese verbindenden Pleuelschaft (3) aufweist, in den ein langgestreckter, sich im wesentlichen über die ganze Länge des Pleuelschaftes (3) erstreckender Kern (4) aus einem Material eingegossen ist der einen kleineren linearen Ausdehnungskoeffizienten, ein geringeres spezifisches Gewicht und einen höheren Schmelzpunkt als das Gußmaterial hat, **dadurch gekennzeichnet,** daß das Gußteil aus Stahl besteht und daß zur Erzeugung einer Zugspannung in dem Gußteil bei der Herstellung als Kern (4) ein druckfester Körper aus Graphit, Keramik, Aluminiumtitanat, Titan oder einem Nitrid, vorzugsweise Bornitrid oder Siliziumnitrid, verwendet ist.

2. Pleuelstange für eine Brennkraftmaschine, mit einem Gußteil, das ein Kolbenbolzenauge (1), ein halbes Kurbelwellen-Lagerauge (2) und einen diese verbindenden Pleuelschaft (3) aufweist, in den ein langgestreckter, sich im wesentlichen über die ganze Länge des Pleuelschaftes (3) erstreckender Kern (4) aus einem Material eingegossen ist, der einen kleineren linearen Ausdehnungskoeffizeinten, ein geringeres spezifisches Gewicht und einen höheren Schmelzpunkt als das Gußmaterial hat, dadurch gekennzeichnet, daß das Gußteil aus Titan besteht und daß zur Erzeugung einer Zugspannung in dem Gußteil bei der Herstellung als Kern ein druckfester Körper aus Graphit, Keramik, Aluminiumtitanat oder einem Nitrid, vorzugsweise Bornitrid oder Siliziumnitrid, verwendet ist.

3. Pleuelstange für eine Brennkraftmaschine, mit einem Gußteil aus einer Leichtmetall-Legierung, das ein Kolbenbolzenauge (1), ein halbes Kurbelwellen-Lagerauge (2) und einen diese verbindenden Pleuelschaft (3) aufweist, in den ein langgestreckter, sich im wesentlichen über die ganze Länge des Pleuelschaftes (3) erstreckender Kern (4) aus einem Material eingegossen ist, der einen kleineren linearen Ausdehnungskoeffizienten, ein geringeres spezifisches Gewicht und einen höheren Schmelzpunkt als das Gußmaterial hat, dadurch gekennzeichnet, daß zur Erzeugung einer Zugspannung in dem Gußteil bei der Herstellung als Kern ein druckfester Körper aus Graphit oder Bornitrid verwendet ist.

## Claims

1. Connecting rod for an internal combustion engine, with a casting which comprises a piston pin boss (1), a halfboss (2) for a crankshaft bearing and a connecting rod shank (3), which connects these two parts and into which an elongate core (4), which extends essentially over the entire length of the connecting rod shank (3), is cast, which core consists of a material having a lower coefficient of linear expansion, a lower relative density and a higher melting point than the casting material, characterised in that the casting consists of steel, and that a compression-proof body of graphite, a ceramic material, aluminium titanate, titanium or a nitride, preferably boron nitride or silicon nitride, is used as the core (4) to produce a tensile stress in the casting during manufacture.

2. Connecting rod for an internal combustion engine, with a casting which comprises a piston pin boss (1), a halfboss (2) for a crankshaft bearing and a connecting rod shank (3), which connects these two parts and into which an elongate core (4), which extends essentially over the entire length of the connecting rod shank (3), is cast, which core consists of a material having a lower coefficient of linear expansion, a lower relative density and a higher melting point than the casting material, characterised in that the casting consists of titanium, and that a compression-proof body of graphite, a ceramic material, aluminium titanate or a nitride, preferably boron nitride or silicon nitride, is used as the core to produce a tensile stress in the casting during manufacture.

3. Connecting rod for an internal combustion engine, with a casting of a light metal alloy which comprises a piston pin boss (1), a half-boss (2) for a crankshaft bearing and a connecting rod shank (3), which connects these two parts and into which an elongate core (4), which extends essentially over the entire length of the connecting rod shank (3), is cast, which core consists of a material having a lower coefficient of linear expansion, a lower relative density and a higher melting point than the casting material, characterised in that a compression-proof body of graphite or boron nitride is used as the core to produce a tensile stress in the casting during manufacture.

## Revendications

1. Bielle pour un moteur à combustion interne, comprenant une pièce moulée en fonte avec un bossage du palier d'axe de piston (1), un demi-coussinet de palier de vilebrequin (2) et un corps de bielle (3) qui les relie et dans lequel est intégré un noyau (4) allongé qui s'étend sensiblement sur toute la longueur du corps de bielle (3) et est constitué d'un matériau lequel présente un coefficient de dilatation linéaire plus faible, un poids spécifique plus faible et un point de fusion plus élevé que le matériau de moulage, **caractérisée en ce** que la pièce moulée est réalisée en acier et que pour la production d'un effort de traction dans ladite pièce moulée lors de la fabrication. on utilise comme noyau (4) un corps résistant à la pression en graphite, céramique, titanate d'aluminium, titane ou un nitrure, de préférence nitrure de bore ou nitrure de silicium.

2. Bielle pour un moteur à combustion interne, comprenant une pièce moulée en fonte avec un bossage du palier d'axe de piston (1), un demi-coussinet de palier de vilebrequin (2) et un corps de bielle (3) qui les relie et dans lequel est intégré un noyau (4) allongé qui s'étend sensiblement sur toute la longueur du corps de bielle (3) et est constitué d'un matériau lequel présente un coefficient de dilatation linéaire plus faible, un poids spécifique plus faible et un point de fusion plus élevé que le matériau de moulage, caractérisée en ce que la pièce moulée est réalisée en titane et que pour la production d'un effort de traction dans ladite pièce moulée lors de la fabrication, on utilise comme noyau un corps résistant à la pression en graphite, céramique, titanate d'aluminium ou un nitrure, de préférence nitrure de bore ou nitrure de silicium.

3. Bielle pour un moteur à combustion interne, comprenant une pièce moulée en alliage léger avec un bossage du palier d'axe de piston (1), un demi-coussinet de palier de vilebrequin (2) et un corps de bielle (3) qui les relie et dans lequel est intégré un noyau (4) allongé qui s'étend sensiblement sur toute la longueur du corps de bielle (3) et est constitué d'un matériau lequel présente un coefficient de dilatation linéaire plus faible, un poids spécifique plus faible et un point de fusion plus élevé que le matériau de moulage, caractérisée en ce que pour la production d'un effort de traction dans la pièce moulée lors de la fabrication, on utilise comme noyau un corps résistant à la pression en graphite ou en nitrure de bore.

FIG.1

FIG.2

FIG.3

$\alpha \left( \frac{\mu m}{mK} \right)$

Al

Fe

Ti

C

$T(^{\circ}C)$